Europäisches Patentamt

European Patent Office

Office européen des brevets

(19)

(11) Veröffentlichungsnummer : **0 101 899**
**B1**

(12) **EUROPÄISCHE PATENTSCHRIFT**

(45) Veröffentlichungstag der Patentschrift :
**10.09.86**

(51) Int. Cl.⁴ : **C 08 L 27/06**

(21) Anmeldenummer : **83107176.6**

(22) Anmeldetag : **22.07.83**

(54) **Formmassen aus Vinylchloridpolymerisat, Pfropfpolymeren und polymeren Weichmachern mit hoher Alterungsbeständigkeit.**

(30) Priorität : **04.08.82 DE 3229078**

(43) Veröffentlichungstag der Anmeldung :
**07.03.84 Patentblatt 84/10**

(45) Bekanntmachung des Hinweises auf die Patenterteilung : **10.09.86 Patentblatt 86/37**

(84) Benannte Vertragsstaaten :
**DE FR GB IT SE**

(56) Entgegenhaltungen :
**EP-A- 0 043 512**
**FR-A- 2 008 674**
**FR-A- 2 011 501**

(73) Patentinhaber : **BAYER AG**
**Konzernverwaltung RP Patentabteilung**
**D-5090 Leverkusen 1 Bayerwerk (DE)**

(72) Erfinder : **Ott, Karl-Heinz, Dr.**
**Paul-Klee-Strasse 54**
**D-5090 Leverkusen 1 (DE)**
Erfinder : **Lindner, Christian, Dr.**
**Riehlerstrasse 200**
**D-5000 Köln 60 (DE)**
Erfinder : **Uerdingen, Walter, Dr.**
**Humperdinckstrasse 41**
**D-5090 Leverkusen 1 (DE)**
Erfinder : **Braese, Hans-Eberhard**
**Kaethe-Kollwitz-Strasse 3**
**D-5000 Köln 71 (DE)**
Erfinder : **Hurnik, Helmut**
**Bonnerstrasse 5**
**D-5090 Leverkusen 3 (DE)**

**0 101 899**

## Beschreibung

Die Erfindung betrifft thermoplastische Formmassen zur Herstellung von Folien mit verbessertem Alterungsverhalten auf der Basis von Kompositionen, die Vinylchloridpolymerisate, bestimmte Pfropf-Polymerisate, bestimmte harzartige Copolymerzusätze und spezielle kautschukartige Copolymerisate enthalten.

Vinylchloridpolymerisate insbesondere Polyvinylchlorid (PVC) stellen weitverbreitete Rohstoffe zur Herstellung verschiedenster Kunststoffartikel dar. Durch Kombination der Vinylchloridpolymerisate mit anderen Stoffen läßt sich bekannterweise das charakteristische Eigenschaftsprofil der Vinylchloridpolymerisate in weiten Bereichen variieren bzw. modifizieren. So eignen sich z. B. nicht oder nur gering modifiziertes PVC (sogenanntes « Hart-PVC ») zur Herstellung von Formkörpern. Diese Formmassen zeigen ein mittleres Verarbeitungsverhalten, mittlere Wärmeformbeständigkeit bei mäßiger Zähigkeit und relativ niedriger Flexibilität. Durch Kombination von z. B. Polyvinylchlorid mit sogenannten Weichmachern mit niedrigen bzw. mittleren Molekulargewichten lassen sich Kunststoffartikel herstellen (« Weich-PVC-Typen »), die bei Gebrauchstemperaturen hohe Flexibilität und Elastizität besitzen. Als Weichmacher sind hierfür z. B. Phthalate, Epoxidverbindungen, aliphatische Diester, Phosphate, Polyester mit Molekulargewichten bis zu etwa 3 000, Trimellitate, Citrate oder bestimmte aliphatische, gegebenenfalls chlorierte, Kohlenwasserstoffe geeignet. Diese Weichmacher sind bekannt (z. B. « Encyclopedia of PVC », Mariel Dekker, INC, New York, 1976).

Kombinationen aus sogenannten polymeren Weichmachern (Polymeren mit höheren Molekulargewichten) mit Vinylchloridpolymerisaten erlauben weiterhin die Herstellung von Weich-PVC-Formkörpern mit verbesserten mechanischen Eigenschaften, z. B. eine verbesserte Abriebfestigkeit, Elastizität, Lösungsmittelbeständigkeit und gegebenenfalls eine bessere Flammfestigkeit. Solche polymere Weichmacher sind z. B. teilvernetzte Butadien-Acrylnitril-Copolymerisate mit bis zu 30 % Acrylnitril und Mooney-Viskositäten (ML 4, 100 °C, (DIN 53 523) von 60-100, (z. B. EP-A-0 005 736)), bestimmte Polyurethane (DE-C-1 193 241) sowie spezielle, in organischen Lösungsmitteln lösliche Ethylen-Vinylacetat-Copolymerisate (z. B. EP-A-0 005 736).

Durch Kombination beispielsweise von Vinylchloridpolymerisaten mit Pfropfpolymeren (z. B. Styrol, α-Methylstyrol, Acrylnitril und/oder Methylmethacrylat gepfropft auf kautschukartige Substrate wie Butadienpolymerisate (Acrylatkautschuk) oder Pfropfpolymerisaten (Vinylchlorid gepfropft auf spezielle Ethylen-Vinylacetat-Copolymere mit z. B. 45 % Vinylacetat und 55 % Ethylen) oder durch Kombination mit anderen Polyethylenderivaten lassen sich Kunststoffblends hoher Kerbschlagzähigkeit herstellen.

Die Kautschukkomponenten der Pfropfpolymermodifikationen sind vorzugsweise von anderer Natur (im Vergleich zu einigen der oben genannten Polymerweichmachern) als die Kautschuke, die als Polymerweichmacher eingesetzt werden können. Diese Unterschiede können zum Beispiel durch chemische Zusammensetzung, den Vernetzungscharakteristiken, der Teilchenmorphologie und der Pfropfcharakteristik gegeben sein.

Weiterhin kann durch spezielle Modifikatoren, die Wärmestandfestigkeit von Vinylchloridpolymerisaten verbessert werden. Hierfür geeignete Modifikatoren sind z. B. Copolymere des Styrols, α-Methylstyrols, Acrylnitrils und Methylmethacrylats.

Um eine technische Verarbeitung dieser Vielzahl von Polymerkombinationen zu ermöglichen, ist eine wirksame Stabilisierung der Systeme, z. B. gegen thermischen, photolytischen und chemischen Abbau nötig. Als Stabilisatoren und Verarbeitungshilfsmittel eignen sich z. B. Ba/Cd-, Pb-, Sn-, Zn-Stabilisatoren oder organische Stabilisatoren sowie phenolische, gegebenenfalls S- oder P-haltige Antioxidantien, Epoxidverbindungen, Wachse, niedermolekulare und hochmolekulare Gleitmittel. Außerdem sind Additive erforderlich, die die Verarbeitungsbedingungen des jeweiligen Systems optimieren.

Solche Hilfsstoffe und deren Verarbeitungsbedingungen werden beispielsweise in « Kunststoff Handbuch », Carl Hanser Verlag, München (1963) beschrieben.

Für spezielle Anwendungen (z. B. als Folie zum Laminieren und Kaschieren) sind Vinylchloridpolymerisate enthaltende Kompositionen mit ganz bestimmten Anforderungsprofil erforderlich : Kombination von guter Zähigkeit, Bruchfestigkeit, Flexibilität, Elastizität (auch bei tieferen Temperaturen), Wärmestandfestigkeit, Abriebfestigkeit, Haftfestigkeit ; Möglichkeiten der Verarbeitung zu flächenartigen Gebilden durch Extrusion, Kalandrieren, Spritzgießen, Tiefziehen ; Laminierbarkeit mit anderen Materialien. Die Kompositionen sollen außerdem gute Migrationsbeständigkeit, Dimensionsstabilität und spezielle Schrumpfeigenschaften aufweisen. Weiterhin sollen sie eine ästhetische Oberflächenbeschaffenheit besitzen und sich durch spezielle Oberflächenbehandlungsverfahren zu Gebilden mit dekorativem Aussehen verarbeiten lassen. Außerdem wird noch eine komfortable Griffeigenschaft solcher Materialien gefordert.

Diese komplexe Anforderungsprofil kann durch thermoplastische Verarbeitung z. B. folgender Komposition in bestimmten Mengenverhältnissen erhalten werden :
Vinylchloridpolymeristat (z. B. PVC),
Weichmacher mit niedrigem Molekulargewicht (z. B. Dioctyladipat, Phthalate),
Pfropfpolymerisat (z. B. ABS-Pfropfpolymere),
Polymerweichmachern (z. B. Butadien-Acrylnitril-Kautschuke) und

eine Komplexe Anzahl von Stabilisatoren für die verschiedenen Komponenten und die Gesamtmischung.

Solche Polymerisatkompositionen besitzen anwendungstechniche Nachteile, welche die Einsetzbarkeit daraus hergestellter Formkörper (insbesondere als Folien) einschränken. Solche Nachteile sind z. B. unbefriedigende Beständigkeit gegen Alterungseinflüsse durch Licht, Wärme, Chemikalien, sonstige artfremde Medien sowie mögliche chemische Wechselwirkungen der verschiedenen Komponenten miteinander. Diese Alterungen machen sich im Verlust mechanischer und visueller Eigenschaften bemerkbar (Versprödung, Farbtonverschlechterung, Ausschwitzungen).

Es wurde nun gefunden, daß man Folien hoher Alterungsbeständigkeit aus speziellen thermoplastischen Formassen herstellten kann, die das anwendungstechnische Anforderungsprofil erfüllen.

Gegenstand der Erfindung sind demnach thermoplastische Formassen, die enthalten :

A) 25-50 Gew-Teile eines Vinylchloridhomo- oder -copolymerisats mit mindestens 50 Gew.-% Vinylchlorid

B) 25-50 Gew.-Teile einer Mischung aus

B1 : 20-100 Gew.-Teilen eines Pfropfproduktes, erhalten durch
B1.1 : Polymerisation einer Monomermischung von 0-75 Gew.-Teilen (Meth)Acrylnitril mit 100-25 Gew.-Teilen Styrol und/oder p-Methylstyrol und/oder $\alpha$-Methylstyrol und/oder Methylmethacrylat in Gegenwart von
B1.2 : eines Kautschukpolymeren, wobei das Gew.-Verhältnis der Monomermischung zu dem Kautschukpolymeren 1 : 10 bis 10 : 1 betragen kann und das Kautschukpolymere darstellt,
B1.2.1 : ein Copolymerisat aus

a) 60-100 Gew.-Teilen eines Acrylesters eines $C_1$-$C_{10}$-Alkohols,
b) 0-40 Gew.-Teilen wenigstens eines Monomeren aus der Reihe Acrylnitril, Methylmethacrylat, Vinylacetat und Vinylether und
c) bis zu 10 Gew.-Teilen eines vernetzend wirkenden bi- oder polyfunktionellen Monomeren oder Polymeren,

B1.2.2 : einem Ethylen-Propylen-Terpolymerisat-Kautschuk und
B2 : 0-80 Gew.-Teilen eines Copolymerisates, erhalten durch Polymerisation von 0-75 Gew.-Teilen (Meth)Acrylnitril und 100-25 Gew.-Teilen wenigstens eines Monomeren aus der Reihe Styrol, $\alpha$-Methylstyrol, p-Methylstyrol und Methylmethacrylat,
C) 0-10 Gew.-Teilen eines harzartigen, thermoplastischen Copolymerisates aus einem Styrol-Acrylnitril- bzw. Methylmethacrylat-Acrylnitril-Copolymeren, das einen Staudinger-Index $[\eta]$, von $\geqslant 3$, vorzugsweise $\geqslant 4$ dl/g, besitzt und dessen $[\eta]$-Rest in jedem Fall über dem des im Grundpolymeren B) enthaltenden Copolymerisates liegt,
D) 5-40 Gew.-Teile eines Copolymerisates, das aufgebaut ist aus :
D1 : einem Ethylen-Vinylacetat- bzw. einem Ethylen-Acrylester-Copolymerisat mit einem Gehalt an polarer Komponente $\geqslant 50$ Gew.-% und mit mittleren Molekulargewichten $\geqslant 1\,500$ und/oder
D2 : einem Ethylen-Vinylacetat-Kohlenmonoxid-Terpolymeren mit einem Gehalt an polarer Komponente $\geqslant 20$ Gew.-% und mit mittleren Molekulargewichten $\geqslant 1\,500$ und/oder
D3 : einem Copolymerisat aus
D3.1 : 10-99,9 Gew.-Teilen eines Acrylesters eines $C_1$-$C_{15}$-Alkohols
D3.2 : 0-90 Gew.-Teilen wenigstens eines bi- oder polyfunktionellen Monomeren mit konjugierten oder unkonjugierten Doppelbindungen im Molekül und gegebenenfalls
D3.3 : bis zu 40 Gew.-%, bezogen auf die Summe von D1) und D2), weiterer Monomerer wie Acrylnitril, Vinylacetat und/oder Methacrylsäurealkylestern von $C_1$-$C_8$-Alkoholen, mit mittleren Molekulargewichten $\geqslant 1\,500$, wobei das Copolymerisat unvernetzt oder teilvernetzt vorliegen soll und
E) 3-30 Gew.-Teile
E1 : eines Copolymerisates, das hergestellt ist aus
E1.1 : 60-95 Gew.-Teilen eines Monomeren mit zwei konjugierten, olefinischen Doppelbindungen und/oder eines Acrylesters eines $C_1$-$C_6$-Alkohols,
E1.2 : 5-40 Gew.-Teilen Styrol und/oder Acrylnitril und/oder Methacrylsäuremethylester, gegebenenfalls
E1.3 : bis zu 10 Gew.-Teilen eines vernetzend wirkenden bis- oder polyfunktionellen Monomeren oder Polymeren mit konjugierten Doppelbindungen und
E1.4 : bis zu 30 Gew.-Teilen weiterer Monomerer wie Vinylacetat, (Meth)Acrylsäure oder Vinylether, wobei die Komponente E1 wenigstens in einem Parameter von der Komponente D3 verschieden sein soll und wobei das Copolymerisat E1 einen Gelgehalt von $\geqslant 70$ % aufweisen soll und/oder
E2 : eines Ethylen-Propylen-Terpolymerisat-Kautschuks mit Gelgehalten $\geqslant 70$ %.

Als Unterscheidungsparameter für die Komponente E1 können beispielsweise chemische Zusammensetzung, Vernetzung, Gelgehalt dienen.

3

Bevorzugte Formmassen enthalten 25-50 Gew.-Teile Komponente A) 25-50 Gew.-Teile Komponente B), 1,5-3 Gew.-Teile Komponente C), 15-35 Gew.-Teile Komponenten D) und 5-20 Gew.-Teile Komponente E).

Vinylchloridpolymerisate A) im Sinne der Erfindung sind z. B. Polyvinylchlorid, Copolymerisate des Vinylchorids mit bis zu 50 Gew.-% copolymerisierbaren Verbindungen, vorzugsweise mit bis zu 20 Gew.-% copolymerisierbaren Verbindungen, sowie Pfropfpolymerisate von Vinylchlorid auf Ethylen-Vinylacetat-Copolymerisate (z. B. mit Vinylacetatgehalten von ≤ 50 Gew.-%).

Mit Vinylchlorid copolymerisierbare Verbindungen sind z. B. :

Vinylester mit 1-8 C-Atomen im Alkylrest der Carbonsäure wie Vinylacetat, Vinylpropionat, Alkylacrylate, Alkylmethacrylate, Alkylvinylether, Propylen, Maleinsäureanhydrid, Halbester und Diester der Maleinsäure mit aliphatischen Alkoholen mit 1-8 C-Atomen im Alkoholrest.

Die Pfropfpolymerisat (mischungen) B im Sinne der Erfindung sind Polymermischungen aus 20-100 Gew.-Teilen, insbesondere 50-100 Gew.-Teilen eines Pfropfproduktes und 0-80 Gew.-Teilen, insbesondere 0-50 Gew.-Teilen eines Copolymerisates. Die Pfropfprodukte werden hergestellt durch Polymerisation einer Monomermischung von 0-75 Gew.-Teilen (Meth)Acrylnitril, vorzugsweise Acrylnitril, mit 100-25 Gew.-Teilen Styrol, p-Methylstyrol und/oder Methylmethacrylat (bevorzugte Monomermischungen bestehen aus Styrol, Acrylnitril, gegebenenfalls in Kombination mit Methylmethacrylat) in Gegenwart eines Kautschukpolymeren, wobei das Gew.-Verhältnis der Monomermischung zu dem Kautschukpolymeren 1 : 10 bis 10 : 1, insbesondere 2 : 8 bis 8 : 2, betragen kann. Kautschukpolymere sind Ethylen-Propylen-Terpolymerisat-Kautschuke, wobei als Termonomere z. B. Diene wie Dicyclopentadien, Hexadien-(1,4)- oder -5-Ethyliden-norbornen-2 oder auch Tricyclopentadien, Heptadien oder Octadien verstanden werden. In den Pfropfprodukten liegen solche Kautschukpolymere in unvernetzter oder partiell vernetzter Form vor (z. B. DE-A 2 539 719).

Weitere Kautschukpolymere sind Copolymerisate aus 60-100 Gew.-Teilen, insbesondere 80-100 Gew.-Teilen, eines Acrylesters eines $C_1$-$C_{10}$-Alkohols. Bevorzugt sind aliphatische $C_1$-$C_8$-Alkohole, besonders bevorzugt Butylacrylat und Ethylhexylacrylat und 0-40 Gew.-Teile, vorzugsweise 0-20 Gew.-Teile eines Monomeren aus der Reihe Acrylnitril, Methylmethacrylat, Vinylacetat oder Vinylether und bis zu 10 Gew.-Teilen eines vernetzend wirkenden bi- oder polyfunktionellen Monomeren, Oligomeren oder Polymeren (z. B. Divinylbenzol, Alkylendi(meth)acrylate, Triallyl-(iso)cyanurat, Butadien, Polybutadien, Isopren, Allylmethacrylat, Allylvinylether, Bis-Methacrylamide).

Die zu Mischung B verwendbaren Copolymerisate werden durch Copolymerisation von 0-75 Gew.-Teilen (Meth)Acrylnitril und 100-25 Gew.-Teile wenigstens eines Monomeren aus der Reihe Styrol, α-Methylstyrol, p-Methylstyrol und Methylmethacrylat erhalten. Bevorzugt sind Copolymerisate aus Styrol, α-Methylstyrol und Acrylnitril, gegebenenfalls in Kombination mit Methylmethacrylat.

In den Pfropfprodukten der Mischung B liegt der Kautschuk vorzugsweise in partiell oder hochvernetzer Form vor (mit Gelgehalten des Pfropfproduktes von 50 %, insbesondere ≥ 70 %). Der Kautschuk liegt vorzugsweise im Pfropfprodukt in teilchenförmiger Form einer mittleren Teilchengröße von 0,05-5 μm vor.

Als Komponente B sind besonders bevorzugt ABS-Polymerisate die als Pfropfgrundlage einen vernetzten Acrylat- bzw. EPDM-Kautschuk besitzen. Die EPDM-Kautschuke haben vorzugsweise einen Gehalt von 10 bis 90 Gew.-Teilen Ethylen, 10-90 Gew.-Teilen Propylen und 0,1 bis 10 Gew.-Teile Dienmonomer.

Harzartige, thermoplastische Copolymerisate im Sinne der Erfindung sind Styrol-Acrylnitril-Copolymerisate bzw. Methylmethacrylat-Acrylnitril-Copolymere, die einen Staudinger Index [η] von ≥ 3, vorzugsweise ≥ 4 dl/g aufweisen (gemessen bei 25 °C Dimethylformamid (DMF)). Die Staudinger Indices dieser Thermoplastkomponente müssen aber in jedem Fall höher sein als die Staudinger Indices der im Grundpolymern B) enthaltenden Copolymerisate (d. h. der im ABS-Pfropfcopolymer enthaltenden Harzkomponenten). Besonders geeignet sind Methylmethacrylat-Acylnitril-Copolymere als Komponente C mit 5-50 Gew.-% eingebautem Acrylnitril. Besonders bevorzugte Polymere C bestehen aus 15-40 Gew.-% Acrylnitril und 85-60 Gew.-% Methylmethacrylat und besitzen einen unvernetzten Aufbau (beispielsweise erkenntlich an ihrer Löslichkeit in geeigneten organischen Lösungsmitteln wie DMF). Diese Copolymerisate können gegebenenfalls einen kleineren Anteil von Methacrylsäureester von $C_2$-$C_8$-Alkoholen sowie Acrylsäureester von $C_1$-$C_6$-Alkoholen eingebaut enthalten.

Die Komponenten D3 im Sinne der Erfindung stellen Copolymerisate aus

D3.1 : 10-99,9 Gew.-Teilen (vorzugsweise 70-99,9 Gew.-Teilen wenigstens eines Acrylesters eines $C_1$-$C_{15}$-Alkohols (vorzugsweise eines aliphatischen Alkohols) vorzugsweise Butylacrylat, Hexylacrylat, Methylacrylat, Ethylacrylat dar, besonders bevorzugt ist Butylacrylat oder Ethylhexylacrylat,

D3.2 : 0-90 Gew.-Teile (vorzugsweise 0,1-30 Gew.-Teile) wenigstens eines Di- oder polyfunktionellen Monomeren mit konjugierten oder unkonjugierten Doppelbindungen im Molekül (wie z. B. Divinylbenzol, Alkyl(meth)acrylate, Triallyl(iso)cyanurat, Butadien, Isopren, Allyl(meth)acrylat) und

D3.3 : bis zu 40 Gew.-%, insbesondere bis zu 30 Gew.-% bezogen auf die Summe von D1) und D2), weiterer Monomerer wie Acrylnitril, Vinylacetat und/oder Methacrylsäurealkylestern von $C_1$-$C_8$-Alkoholen, vorzugsweise Methylmethacrylat ;

diese Copolymerisate können unvernetzt oder partiell vernetzt vorliegen ; die in den Copolymerisaten vorliegenden löslichen Copolymeranteile sollen Molekulargewichte von 1 000-2 000 000 aufweisen,

4

vorzugsweise Molekulargewichte ≥ 20 000 ; besonders bevorzugt sind Copolymerisate D3, bestehend aus 5-35 Gew.-Teilen Acrylnitril, gegebenenfalls im Gemisch mit Methylmethacrylat- und/oder Vinylacetat, 85-65 Gew.-Teilen Butylacrylat, gegebenenfalls im Gemisch mit Ethylenhexylacrylat und 0-10 Gew.-Teilen polyfunktionellen Monomeren ; diese Produkte sind bevorzugt partiell vernetzt, besitzen Gelgehalte ≥ 30 % und Quellungsindices (gemessen in Dimethylformamid) im Bereich von 10-60, vorzugsweise im Bereich von 15-40.

Als Komponente D sind weiterhin geeignet Ethylen-Vinylacetat bzw. -Acrylester-Copolymerisate mit einem Gehalt an polarer Komponente ≥ 50 %, vorzugsweise ≥ 60 % und mittleren Molekulargewichten ≥ 1 500, bevorzugt ≥ 10 000, besonders bevorzugt ≥ 100 000 ; weiterhin geeignet sind Ethylen-Vinylacetat-Kohlenmonoxid-Terpolymere mit einem Gehalt an polarer Komponente ≥ 20 %.

Die Komponente E im Sinne der Erfindung ist ein Ethylen-Propylen-Terpolymerisat-Kautschuk mit den oben genannten Dienmonomeren als Termonomer, wobei ein solcher Kautschuk bevorzugt vernetzt vorliegen soll (Gelgehalte ≥ 70 Gew.-%).

Die Komponenten E1) im Sinne der Erfindung sind Copolymerisate aus

E1.1 : 60-95 Gew.-Teile (vorzugsweise 65-86 Gew.-Teile) eines Monomeren mit konjugierten, olefinischen Doppelbindungen (z. B. Butadien, Isopren, Chloropren) und/oder eines Acrylesters eines $C_1$-$C_6$-Alkohols (z. B. Ethyl-, Butyl-, Hexylacrylat),

E1.2 : 5-40 Gew.-Teilen (vorzugsweise 15-35 Gew.-Teilen) Styrol und/oder Acrylnitril und/oder Methacrylsäuremethylester, gegebenenfalls

E1.3 : bis zu 10 Gew.-Teilen eines vernetzend wirkenden bis- oder polyfunktionellen Monomeren oder Oligomeren oder Polymeren mit konjugierten oder nicht konjugierten Doppelbindungen und

E1.4 : bis zu 30 Gew.-Teilen weiterer Monomeren, z. B. Vinylacetat, (Meth)Acrylsäure, Vinylether, Methoxymethacrylamid, vorzugsweise Vinylacetat.

Derartige Copolymerisate sollen Gelgehalte ≥ 70 % aufweisen und in wenigstens einem Parameter, z. B. chem. Zusammensetzung, Vernetzung, Gelgehalt, Quellungsindex vom Copolymerisat D3) verschieden sein.

Bevorzugte Copolymerisate sind Copolymere aus 20-35 Gew.-Teilen Acrylnitril, 80-65 Gew.-Teilen Butadien mit Gelgehalten ≥ 70 % oder Copolymerisate aus 15-35 Gew.-Teilen Acrylnitril, 85-65 Gew.-Teilen Acrylsäurealkylester und 0,4-10 Gew.-Teilen eines vernetzend wirkenden Agenz (letztere können polyfunktionelle Vinyl- oder Allylmonomere sein, z. B. Butadien, Isopren, Dienoligomere, Polydiene, $C_2$-$C_{30}$-Alkylene mit endständigen polymerisierbaren Gruppen, vorzugsweise (Meth)Acrylsäureester, Polybutadienkerne in vernetzter Form, auf die Alkylacrylat im Gemisch mit Acrylnitril aufgepfropft wurden) ; diese Copolymere können anteilsmäßig Vinylacetat eingebaut enthalten.

Die Komponenten E1 sollen sich wenigstens in einem Parameter von den Komponenten D3 unterscheiden. Die unterschiedliche Wirkung der Komponenten E1 und D3 in der erfindungsgemäßen Komposition kann vorzugsweise durch die chemische Zusammensetzung und die Stärke der Vernetzung (oder Nichtvernetzung) eingestellt werden (ausgedrückt durch Gelgehalt, Quellungsindex, Molekulargewicht des löslichen Anteils).

Die Komponenten D und E der erfindungsgemäßen Formmassen können auch dann zur Herstellung der erfindungsgemäßen Formmassen verwendet werden, wenn sie als spezielle Pfropfpolymere vorliegen (= Pfropfpolymere von den die Komponente A bildenden Vinylchloridpolymeren auf die Polymeren D und E als Pfropfgrundlage).

Die erfindungsgemäß geeigneten Vinylchloridpolymerisate können nach bekannten technischen Verfahren hergestellt werden, z. B. Emulsions-, Suspensions-, bzw. Masse-Polymerisationsprozessen.

Zur Herstellung der geeigneten Pfropfprodukte können Verfahren wie Emulsions-, Suspensions-, Masse-, Lösungs-Fällungspolymerisationsprozesse herangezogen werden. Besonders geeignete Prozesse sind Emulsionspolymerisationen, Lösungspolymerisationen oder Kombinationen aus Emulsionspolymerisationen, Lösungspolymerisationen oder Kombinationen aus Emulsions- bzw. Lösungs- und Suspensionspolymerisationen.

Besonders bevorzugte Pfropfpolymerisate werden erhalten, indem man in einer ersten Stufe ein Acrylat(copolymer) kautschuk in wäßriger Emulsion (in Anwesenheit von Emulgatoren, Radikalbildnern, Reglern, etc) radikalisch zu einem wäßrigen Latex, einer Latexteilchengröße von ca. 0,05-5 μm polymerisiert (gegebenenfalls in Kombination mit bekannten Latexteilchenagglomerisationsverfahren) und in Gegenwart dieses Kautschuklatex die genannten Vinylmonomeren (vorzugsweise Styrol, Acylnitril, Methylmethacrylat) derart radikalisch polymerisiert, daß Pfropfpolymere der Vinylmonomere auf die Kautschuklatexteilchen gebildet werden.

Ein bevorzugtes Verfahren zur Herstellung der Pfropfprodukte auf der Basis von Ethylen-Pfropylen-Kautschuk ist die bekannte Lösungs- bzw. Massepolymerisation mit sogenannter « Phaseninversion » und anschließender Beendigung der Pfropfpolymerisation in Schmelze, Lösung oder Suspension.

Werden für die erfindungsgemäßen Polymermischungen auch Copolymerisate B2 eingesetzt, so spielt deren Herstellprozeß für die Eigenschaften der erfindungsgemäßen Formmassen keine Rolle, d. h. als Copolymerisate B2 lassen sich Harze einsetzen, die durch Emulsions-, Suspensions-, Dispersions-, Masse-, Fällung- oder Lösungspolymerisationen erhalten wurden. Im Anschluß an solche Polymerisationen können gegebenenfalls Antioxidantien (z. B. vom Phenoltyp) zugesetzt werden. Aus Pfropfpolymerlatices lassen sich die Polymerisate nach bekannten Verfahren isolieren (z. B. in Form von Pulvern) z. B.

durch Koagulation durch Zusatz von Elektrolyten, Säuren oder Lösungsmitteln, verbunden mit anschließender Entwässerung der Pulver durch Trocknungsprozesse. Die geeigneten Thermoplastzusätze der Komponente C) sind durch Emulsions- oder Suspensionsverfahren herzustellen, in Gegenwart von bekannten Oberflächenaktionen, Substanzen und Initiatoren, vorzugsweise Radikalbildnern. Man kann solche Polymere entweder aus der anfallenden Latexform isolieren (z. B. durch Sprühtrocknung oder Elektrolytkoagulation) oder die anfallenden Latices werden mit anderen Latices der erfindungsgemäßen Kompositionsbestandteil (z. B. mit dem ASA-Latex und/oder dem gegebenenfalls als Latex vorliegenden Komponenten D) und F)) vermischt und gemeinsam koaguliert.

Solche Co-Koagulationsverfahren führen zu Komponentenmischungen (als Bestandteile der erfindungsgemäßen Komposition), die besonders bevorzugt werden und zu Formmassen mit besonderen, guten Eigenschaften führen (z. B. verbessertem Verarbeitungsverhalten der erfindungsgemäßen Kompositionen).

Die erfindungsgemäß geeigneten Komponenten D) können nach bekannten Verfahren durch radikalische Copolymerisationsprozesse hergestellt werden, z. B. Emulsionspolymerisationen, Lösungs-, Masse- oder Suspensionspolymerisationen sowie Kombinationen aus Emulsions- und Suspensionspolymerisationen. Besonders bevorzugt ist die Verfahrensweise der wäßrigen Emulsionspolymerisation und der Lösungspolymerisation. Die Polymerisate werden im Anschluß an den Herstellprozeß nach bekannten Verfahren isoliert, z. B. durch Filtration, Koagulation, Eindampfverfahren, vorzugsweise durch Koagulation von Emulsionen.

Ebenso wie bei den anderen Komponenten der erfindungsgemäßen Formmassen können die Einzelkomponenten während oder nach dem Herstellprozeß mit üblichen Antioxidantien, Thermostabilisatoren oder Lichtschutzmitteln ausgerüstet bzw. stabilisiert werden.

Die Komponenten E) werden vorzugsweise auf solchen Wegen hergestellt, bei denen eine Vernetzung des Materials auf Gelgehalte $\geq 70\,\%$ möglich ist. Ein bevorzugtes Herstellverfahren für die Komponente E) stellt demnach die Emulsionspolymerisation dar (z. B. in wäßrigen Medien). Andere Herstellverfahren sind z. B. Lösungspolymerisationen (unter Ausbildung eines im wesentlichen unvernetzten Materials) und anschließende Einwirkung von Vernetzern, die die notwendige Vernetzung herbeiführten (z. B. in Substanz oder nach Dispergierung des durch Lösungspolymerisation erhaltenen Vorkondensates). Bei diesen Verfahren können übliche Radikalbildner sowie auch geeignete Strahlen Verwendung finden.

Ein besonders geeignetes Verfahren stellt die wäßrige Emulsionspolymerisation mit anschließender Koagulation der anfallenden wäßrigen Latices dar.

Die erfindungsgemäßen Formmassen können nach üblichen Methoden der Kunststoffverarbeitung verarbeitet werden, beispielsweise durch Spritzung, Extrusion, Hohlkörperblasen, Tiefziehen, Kalandrieren. Vorzugsweise eignen sich die Formmassen zur Herstellung von Folien.

Die Grenzviskositäten (Staudinger-Indices) wurden in dem jeweiligen angegebenen Lösungsmittel bestimmt.

Zur Definition von Staudinger-Index, Quellungsindex, Gelgehalt siehe M. Hoffmann, H. Krömer, R. Kuhn « Polymeranalytik I und II », Georg-Thieme Verlag (Stuttgart 1977).

Die Pfropfkautschukteilchengrößen sind $d_{50}$-Werte (Durchmesser) (zur Definition siehe Ultrazentrifugen-Messungen : W. Scholtan, H. Lange, Kolloidz. und Z. Polymere 250 (1972) 783-796).

Zur Herstellung der in Tabelle 2 beschriebenen Formmassen werden X Gew.-Teile Polyvinylchlorid (K-Wert 70) mit unterschiedlichen Mengen verschiedener Produkte (Tabelle 1) kombiniert. Als notwendiger Stabilisator- und Gleitmittelzusatz wurden in jedem Fall 2 Gew.-% Ba/Cd-Laurat (fest), 0,3 Gew.-% sterisch gehindertes phenolisches Antioxidans (fest) und 0,2 Gew.-% Esterwachs zugesetzt. Die Formmassen wurden auf einem Mischwalzwerk 10 Minuten bei 180 °C homogenisiert und bei 190 °C zu Prüfkörpern verpreßt.

Tabelle 1

Eingesetzte Polymerisate

Produkt 1.1 : Mischung aus 94 Gew.-Teilen eines ABS-Polymerisates und 6 Gew.-Teilen eines Methylmethacrylat-Acrylnitril-Copolymerisats, enthaltend 32 Gew.-% Acrylnitril, mit einem Staudingerindex von 5 dl/g (in DMF bei 25 °C) ; das ABS-Polymerisat, hergestellt durch Emulsionspolymerisation, enthält 30 Gew.-% Polybutadien mit einem Gelgehalt von > 70 % und einer Teilchengröße von 0,4 μm.

Produkt 1.2 : Mischung aus 94 Gew.-Teilen eines ASA-Polymerisates und 6 Gew.-Teilen eines Methylmethacrylat-Acrylnitril-Copolymerisates, enthaltend 32 Gew.-% Acrylnitril, mit einem Staudingerindex von 5 dl/g ; das ASA-Polymerisat, hergestellte durch Emulsionspolymerisation, enthält 30 Gew.-% Acrylatkautschuk mit einem Gelgehalt von > 70 % und einer Kautschukteilchengröße von ca. 0,5 μm.

Produkt 1.3 : Mischung aus 94 Gew.-Teilen eines AES-Polymerisates und 6 Gew.-Teilen eines Styrol-Acrylnitril-Copolymeren mit einem Stadingerindex von 10 dl/g (in DMF bei 25 °C), das AES-Polymerisat, hergestellt durch Masse/Suspensionspolymerisation, enthält ca. 28 Gew.-% teilvernetzten EPDM-Kautschuk mit einem Gelgehalt von 70 % und einer Teilchengröße von 0,4-5 μm und 72 Gew.-% SAN das in Gegenwart des EPDM-Kautschuks polymerisiert.

Produkt 1.4 : Durch Emulsionspolymerisation bei 65 °C wird entsprechend folgender Gesamtrezeptur ein Latex erhalten, aus dem durch Koagulation mit MgSO$_4$ ein kautschukartiges Polymer erhalten wird :

2 590 Gew.-Teilen Wasser
25 Gew.-Teilen Na-C$_{14}$-C$_{16}$-Alkylsulfonat
2 Gew.-Teilen Kaliumperoxidisulfat
1 181 Gew.-Teilen Butylacrylat
300 Gew.-Teilen Vinylacetat
94 Gew.-Teilen Acrylnitril
7 Gew.-Teilen NaHCO$_3$

Das Polymer ist löslich in organischen Lösungsmitteln und weist einen Staudingerindex von 1,2 dl/g in Dimethylformamid (DMF) auf.

Produkt 1.5 : Durch Emulsionspolymerisation bei 65 °C wird entsprechend folgender Rezeptur ein Latex erhalten, aus dem durch Koagulation mit MgSO$_4$ ein kautschukartiges Polymer erhalten wird :

2 590 Gew.-Teilen Wasser
27 Gew.-Teilen Na-C$_{14}$-C$_{16}$-Alkylsulfonat
2 Gew.-Teilen Kaliumperoxidisulfat
1 182 Gew.-Teilen Butylacrylat
393 Gew.-Teilen Acrylnitril
4 Gew.-Teilen Triallylcyanurat

Das Polymer weist einen Gelgehalt von 92 (in DMF) und einen Quellungsindex von 19,8 auf.

Produkt 1.6 : Das Polymerisat besteht aus 70 Gew.-% Vinylacetat und 30 Gew.-% Ethylen und besitzt ein durchschnittliches Molekulargewicht von 200 000.

Produkt 1.7 : Das Polymerisat besteht aus 6 Gew.-% Kohlenmonoxid, 24 Gew.-% Vinylacetat und 70 Gew.-% Ethylen und weist ein Molekulargewicht von ca. 150 000 auf.

Produkt 1.8 : Das Polymerisat besteht aus 29 Gew.-% Acrylnitril und 71 Gew.-% Butadien, stellt ein Emulsionspolymerisat dar und weist einen Gelgehalt von 60 % auf.

(Siehe Tabelle 2 Seite 8 ff.)

Tabelle 2

| Beispiel 1 | | Beispiel 2 | | Beispiel 3 | | Beispiel 4 | | Beispiel 5 | | Beispiel 6 | |
|---|---|---|---|---|---|---|---|---|---|---|---|
| Prod. | Gew.-Teile | Prod. | Gew.-Teile | Prod. | Gew.-Teile | Prod. | Gew.-Teile | Prod. | Gew.-Teile | Prod. | Gew.-Teile |
| PVC | 36 | PVC | 30 | PVC | 30 | PVC | 30 | PVC | 30 | PVC | 36 |
| 1.1 | 36 | 1.2 | 45 | 1.2 | 45 | 1.3 | 45 | 1.2 | 45 | 1.2 | 36 |
| DIDP* | 18 | 1.6 | 30 | 1.4 | 35 | 1.4 | 35 | 1.7 | 28 | DIDP | 18 |
| 1.8 | 10 | 1.5 | 10 | 1.5 | 10 | 1.8 | 5 | 1.5 | 10 | 1.5 | 10 |
|  |  |  |  |  |  | 1,5 | 5 |  |  |  |  |
| Zugfestigkeit MPa DIN 53 455 | 22,3 | | 23,5 | | 22,7 | | 20,9 | | 21,8 | | 20,2 |
| Dehnung % DIN 53 455 | 230 | | 285 | | 270 | | 265 | | 238 | | 220 |
| Vicat-Wert °C, DIN 53 460, Verf. A | 80 | | 75 | | 80 | | 78 | | 76 | | 79 |
| Shore Härte D DIN 54 505 | 51 | | 53 | | 56 | | 57 | | 51 | | 50 |
| Weiterreißfestigkeit N/mm DIN 53 515 | 83 | | 74 | | 60 | | 64 | | 70 | | 78 |

* Diisodecylphthalat

0 101 899

| | Beispiel 1 | Beispiel 2 | Beispiel 3 | Beispiel 4 | Beispiel 5 | Beispiel 6 |
|---|---|---|---|---|---|---|
| | Prod. Gew.-Teile | Prod. Gew.-Teile | Prod. Gew.-Teile | Prod. Gew.-Teile | Prod. Gew.-Teile | Prod. Gew.-Teile |
| Dehnung nach % Alterung (120°C, 21d) DIN 53 455 | 4 | 219 | 214 | 106 | 171 | 65 |

Wie aus der Tabelle hervorgeht, weisen Formmassen der erfindungsgemäßen Zusammensetzung ein wesentlich verbessertes mechanisches Eigenschaftsniveau nach Alterung auf, als bekannte Formmassen des Beispiels 1. Insbesondere durch die Kombination von ASA- oder AES-Polymerisaten mit kautschukartigen Ethylencopolymerisaten oder Acrylatcopolymerisaten werden Formmassen besonders günstiger Alterungsbeständigkeit erhalten.

0 101 899

**0 101 899**

**Patentanspruch**

Thermoplastische Formmassen aus

A) 25-50 Gew.-Teilen eines Vinylchloridhomo- oder -copolymerisats mit mindestens 50 Gew.-% Vinylchlorid

B) 25-50 Gew.-Teilen einer Mischung aus

B1 : 20-100 Gew.-Teilen eines Pfropfproduktes, erhalten durch

B1.1 : Polymerisation einer Monomermischung von 0-75 Gew.-Teilen (Meth)Acrylnitril mit 100-25 Gew.-Teilen Styrol und/oder p-Methylstyrol und/oder α-Methylstyrol und/oder Methylmethacrylat in Gegenwart von

B1.2 : eines Kautschukpolymeren, wobei das Gew.-Verhältnis der Monomermischung zu dem Kautschukpolymeren 1 : 10 bis 10 : 1 betragen kann und das Kautschukpolymere darstellt,

B1.2.1 : einem Copolymerisat aus

a) 60-100 Gew.-Teilen eines Acrylesters eines $C_1$-$C_{10}$-Alkohols,

b) 0-40 Gew.-Teilen wenigstens eines Monomeren aus der Reihe Acrylnitril, Methylmethacrylat, Vinylacetat und Vinylether und

c) bis zu 10 Gew.-Teilen eines vernetzend wirkenden bi- oder polyfunktionellen Monomeren oder Polymeren,

B1.2.2 : einem Ethylen-Propylen-Terpolymerisat-Kautschuk und

B2 : 0-80 Gew.-Teilen eines Copolymerisates, erhalten durch Polymerisation von 0-75 Gew.-Teilen (Meth)Acrylnitril und 100-25 Gew.-Teilen wenigstens eines Monomeren aus der Reihe Styrol, α-Methylstyrol, p-Methylstyrol und Methylmethacrylat,

C) 0-10 Gew.-Teilen eines harzartigen, thermoplastischen Copolymerisates aus einem Styrol-Acrylnitril- bzw. Methylmethacrylat-Acrylnitril-Copolymeren, das einen Staudinger-Index [η], von ≥ 3 dl/g, besitzt und dessen [η]-Rest in jedem Fall über dem des im Grundpolymeren B) enthaltenden Copolymerisates liegt,

D) 5-40 Gew.-Teile eines Copolymerisates, das aufgebaut ist aus :

D1 : einem Ethylen-Vinylacetat- bzw. einem Ethylen-Acrylester-Copolymerisat mit einem Gehalt an polarer Komponente ≥ 50 Gew.-% und mit mittleren Molekulargewichten ≥ 1 500 und/oder

D2 : einem Ethylen-Vinylacetat-Kohlenmonoxid-Terpolymeren mit einem Gehalt an polarer Komponente ≥ 20 Gew.-% und mit mittleren Molekulargewichten ≥ 1 500 und/oder

D3 : einem Copolymerisat aus

D3.1 : 10-99,9 Gew.-Teilen eines Acrylesters eines $C_1$-$C_{15}$-Alkohols

D3.2 : 0-90 Gew.-Teilen wenigstens eines bi- oder polyfunktionellen Monomeren mit konjugierten oder unkonjugierten Doppelbindungen im Molekül und gegebenenfalls

D3.3 : bis zu 40 Gew.-%, bezogen auf die Summe von D1) und D2), weiterer Monomerer wie Acrylnitril, Vinylacetat und/oder Methacrylsäurealkylestern von $C_1$-$C_8$-Alkoholen, mit mittleren Molekulargewichten ≥ 1 500, wobei das Copolymerisat unvernetzt oder teilvernetzt vorliegen soll und

E) 3-30 Gew.-Teilen

E1 : eines Copolymerisates, das hergestellt ist aus

E1.1 : 60-95 Gew.-Teilen eines Monomeren mit zwei konjugierten, olefinischen Doppelbindungen und/oder eines Acrylesters eines $C_1$-$C_6$-Alkohols,

E1.2 : 5-40 Gew.-Teilen Styrol und/oder Acrylnitril und/oder Methacrylsäuremethylester, gegebenenfalls

E1.3 : bis zu 10 Gew.-Teilen eines vernetzend wirkenden bis- oder polyfunktionellen Monomeren oder Polymeren mit konjugierten Doppelbindungen und .

E1.4 : bis zu 30 Gew.-Teilen weiterer Monomerer wie Vinylacetat, (Meth)Acrylsäure oder Vinylether,

wobei die Komponente E1 wenigstens in einem Parameter von der Komponente D3 verschieden sein soll und wobei das Copolymerisat E1 einen Gelgehalt von 70 % aufweisen soll und/oder

E2 : eines Ethylen-Propylen-Terpolymerisat-Kautschuks mit Gelgehalten ≥ 70 %.

**Claim**

Thermoplastic moulding compositions of

A) 25-50 parts by weight of a vinyl chloride homo- or copolymer containing at least 50 % by weight of vinyl chloride,

B) 25-50 parts by weight of a mixture of

B1 : 20-100 parts by weight of a graft product obtained by

B1.1 : polymerising a monomer mixture of 0-75 parts by weight of (meth)acrylonitrile with 100-25 parts by weight of styrene and/or p-methylstyrene and/or α-methylstyrene and/or methyl methacrylate in the presence of

10

**0 101 899**

B1.2 : a rubber polymer, it being possible for the weight ratio of the monomer mixture to the rubber polymer to be 1 : 10 to 10 : 1 and the rubber polymer represents

B1.2.1 : a copolymer of

a) 60-100 parts by weight of an acrylic ester of a $C_1$-$C_{10}$ alcohol,

b) 0-40 parts by weight of at least one monomer from the series comprising acrylonitrile, methyl methacrylate, vinyl acetate and vinyl ether and

c) up to 10 parts by weight of a cross-linking bi- or polyfunctional monomer or polymer,

B1.2.2 : an ethylene/propylene terpolymer rubber and

B2 : 0-80 parts by weight of a copolymer obtained by polymerisation of 0-75 parts by weight of (meth)-acrylonitrile and 100-25 parts by weight of at least one monomer from the series comprising styrene, $\alpha$-methylstyrene, p-methylstyrene and methyl methacrylate,

C) 0-10 parts by weight of a resin-like, thermoplastic copolymer of a styrene/acrylonitrile or methyl methacrylate/acrylonitrile copolymer which has a Staudinger index $[\eta]$ of $\geqslant 3$ dl/g, and of which the $[\eta]$ residue is in any case higher than that of the copolymer contained in the basic polymer B),

D) 5-40 parts by weight of a copolymer which is composed of :

D1 : an ethylene/vinyl acetate or an ethylene/acrylic ester copolymer containing $\geqslant 50$ % by weight of the polar component and having average molecular weights of $\geqslant 1\,500$ and/or

D2 : an ethylene/vinyl acetate/carbon monoxyde terpolymer containing $\geqslant 20$ % by weight of the polar component and having average molecular weights of $\geqslant 1\,500$ and/or

D3 : a copolymer of

D3.1 : 10-99.9 parts by weight of an acrylic ester of a $C_1$-$C_{15}$ alcohol,

D3.2 : 0-90 parts by weight of at least one bi- or polyfunctional monomer containing conjugated or unconjugated double bonds in the molecule and optionally

D3.3 : up to 40 % by weight, based on the sum of D1) and D2), of other monomers such as acrylonitrile, vinyl acetate and/or methacrylic acid alkyl esters of $C_1$-$C_8$ alcohols, having average molecular weights of $\geqslant 1\,500$, wherein the copolymer should by uncross-linked or partially cross-linked and

E) 3-30 parts by weight

E1 : of a copolymer produced from

E1.1 : 60-95 parts by weight of a monomer containing two conjugated, olefinic double bonds and/or of an acrylic ester of a $C_1$-$C_6$ alcohol,

E1.2 : 5-40 parts by weight of styrene and/or acrylonitrile and/or methacrylic acid methyl ester, optionally

E1.3 : up to 10 parts by weight of a cross-linking bi- or polyfunctional monomer or polymer containing conjugated double bonds and

E1.4 : up to 30 parts by weight of other monomers such as vinyl acetate, (meth)acrylic acid or vinyl ether,

wherein component E1 should be different from component D3 in at least one parameter and wherein the copolymer E1 should have a gel content of 70 % and/or

E2 : of an ethylene/propylene terpolymer rubber having gel contents of $\geqslant 70$ %.

**Revendication**

Matières à mouler thermoplastiques consistant en

A) 25 à 50 parties en poids d'un homo- ou co-polymère du chlorure de vinyle à au moins 50 % en poids de chlorure de vinyle,

B) 25 à 50 parties en poids d'un mélange de

B1 : 20 à 100 parties en poids d'un produit de greffage obtenu par

B1.1 : polymérisation d'un mélange de monomères consistant en 0 à 75 parties en poids de (méth)acrylonitrile et 100 à 25 parties en poids de styrène et/ou de p-méthylstyrène et/ou d'$\alpha$-méthylstyrène et/ou de méthacrylate de méthyle en présence de

B1.2 : un polymère du type caoutchouc, les proportions relatives en poids entre le mélange des monomères et le polymère du type caoutchouc devant être de 1 : 10 à 10 : 1, et le polymère du type caoutchouc consistant en

B1.2.1 : un copolymère de

a) 60 à 100 parties en poids d'un ester acrylique d'un alcool en $C_1$-$C_{10}$,

b) 0 à 40 parties en poids d'au moins un monomère de la classe de l'acrylonitrile, du méthacrylate de méthyle, de l'acétate de vinyle et des éthers vinyliques et

c) jusqu'à 10 parties en poids d'un monomère ou polymère bi- ou poly-fonctionnel à effet réticulant,

B1.2.2 : un caoutchouc du type copolymère ternaire éthylène-propylène et

B2 : 0 à 80 parties en poids d'un copolymère obtenu par polymérisation de 0 à 75 parties en poids de (méth)acrylonitrile et 100 à 25 parties en poids d'au moins un monomère de la classe du styrène, de l'α-méthylstyrène, du p-méthylstyrène et du méthacrylate de méthyle,

C) 0 à 10 parties en poids d'un copolymère thermoplastique résineux consistant en un copolymère styrène-acrylonitrile ou méthacrylate de méthyle-acrylonitrile, présentant un indice de Staudinger [η] supérieur ou égal à 3 dl/g, et dont le reste [η] est dans tous les cas supérieur à celui du copolymère contenu dans le polymère de base B),

D) 5 à 40 parties en poids d'un copolymère constitué de :

D1 : un copolymère éthylène-acétate de vinyle ou un copolymère éthylène-ester acrylique à une teneur en composant polaire supérieure ou égale à 50 % en poids, et à des poids moléculaires moyens supérieurs ou égaux à 1 500 et/ou

D2 : un copolymère ternaire éthylène-acétate de vinyle-oxyde de carbone à une teneur en composant polaire supérieure ou égale à 20 % en poids et à des poids moléculaires moyens supérieurs ou égaux à 1 500, et/ou

D3 : un copolymère de

D3.1 : 10 à 99,9 parties en poids d'un ester acrylique d'un alcool en $C_1$-$C_{15}$,

D3.2 : 0 à 90 parties en poids d'au moins un monomère bi- ou poly-fonctionnel contenant des doubles liaisons conjuguées ou non conjuguées dans la molécule, et le cas échéant,

D3.3 : jusqu'à 40 % en poids, par rapport à la somme de D1 et D2, d'autres monomères tels que l'acrylonitrile, l'acétate de vinyle et/ou des méthacrylates d'alkyle dérivant d'alcools en $C_1$-$C_8$, à des poids moléculaires moyens supérieurs ou égaux à 1 500, le copolymère étant à l'état non réticulé ou partiellement réticulé et,

E) 3 à 30 parties en poids de

E1 : un copolymère préparé à partir de

E1.1 : 60 à 95 parties en poids d'un monomère contenant deux doubles liaisons oléfiniques conjuguées et/ou d'un ester acrylique d'un alcool en $C_1$-$C_6$,

E1.2 : 5 à 40 parties en poids de styrène et/ou d'acrylonitrile et/ou de méthacrylate de méthyle, le cas échéant,

E1.3 : jusqu'à 40 parties en poids d'un monomère ou polymère bis- ou poly-fonctionnel contenant des doubles liaisons conjuguées, à effet réticulant, et

E1.4 : jusqu'à 30 parties en poids d'autres monomères comme l'acétate de vinyle, l'acide (méth)acrylique ou des éthers vinyliques,

le composant E1 devant différer par au moins un paramètre du composant D3 et le copolymère E1 devant présenter une teneur en gel de 70 %, et/ou

E2 : un caoutchouc du type copolymère ternaire d'éthylène-propylène à des teneurs en gel supérieures ou égales à 70 %.